# EUROPÄISCHE PATENTSCHRIFT

(11) **EP 2 453 560 B1**
(45) Veröffentlichungstag und Bekanntmachung des Hinweises auf die Patenterteilung: **02.11.2022**
(21) Anmeldenummer: 11002128.4
(22) Anmeldetag: 15.03.2011
(51) Int. Cl.: H02K 11/00, F04D 13/06, F04D 15/02, F04D 29/046, H02K 21/16, H02K 21/24, H02K 1/14, H02K 5/10, H02K 1/18, H02K 5/128, H02K 5/173, H02K 5/22

(54) **Pumpenaggregat**
Pump unit
Groupe motopompe

(30) Priorität: 11.11.2010 DE 102010051916; 11.11.2010 DE 102010051918
(43) Veröffentlichungstag der Anmeldung: 16.05.2012
(73) Patentinhaber: Grundfos Management a/s, 8850 Bjerringbro (DK)
(72) Erfinder: Blaser, Georg, 71679 Asperg (DE)
(74) Vertreter: Patentanwälte Vollmann Hemmer Lindfeld Partnerschaft mbB

(56) Entgegenhaltungen:
- EP-A1- 0 688 088
- EP-A1- 1 947 343
- WO-A1-93/05564
- WO-A2-2009/012883
- DE-A1- 19 617 083

## Beschreibung

Die Erfindung betrifft ein Pumpenaggregat mit einem elektrischen Antriebsmotor und einer elektronischen Steuereinrichtung.

Solche Pumpenaggregate sind beispielsweise als Umwälzpumpenaggregate, insbesondere Heizungs- oder Brauchwasserpumpenaggregate bekannt. Diese Pumpenaggregate weisen einen elektrischen Antriebsmotor auf, welcher ein oder mehrere Laufräder in einem Pumpengehäuse antreibt. Zur Steuerung des Antriebsmotors sind elektronische Steuereinrichtungen bekannt, insbesondere Frequenzumrichter, welche die Drehzahlsteuerung des Antriebsmotors ermöglichen.

Bei den bekannten Pumpenaggregaten ist es üblich, dass der Antriebsmotor in einem Statorgehäuse angeordnet ist und die elektronischen Komponenten zur Steuerung des Antriebsmotors in einem Elektronikgehäuse angeordnet werden, welches von außen an das Motor- bzw. Statorgehäuse angesetzt ist. Dabei kann das Elektronikgehäuse umfänglich oder auch axial an das Statorgehäuse angesetzt sein. Solche Pumpenaggregate werden häufig in verschiedenen Ausführungen angeboten, welche unterschiedliche elektronische Steuereinrichtungen aufweisen, sei es, dass sie an unterschiedliche Eingangsspannungen für verschiedene Länder angepasst werden müssen oder, dass unterschiedliche Funktionen zur Steuerung des Antriebsmotors bereit gestellt werden sollen.

Aus der EP 0 688 088 A1 ist ein bürstenloser Permanentmagnet-Motor zur Effizienzsteigerung von Kühlschränken bekannt. Die EP 0 688 088 A1 offenbart einen elektrischen Antriebsmotor mit einer elektronischen Steuereinrichtung zur Steuerung des Antriebsmotors, wobei die Steuereinrichtung in zwei auf zumindest zwei getrennten Leiterplatten angeordnete Funktionsbausteine aufgeteilt ist, von denen ein erster Funktionsbaustein ein Versorgungsteil darstellt, welches die Eingangsspannung für den zweiten Funktionsbaustein bereitstellt, wobei der zweite Funktionsbaustein eine Motorelektronik aufweist, welche mit Statorspulen des Antriebsmotors zu deren Bestromung verbunden ist, wobei ein Eingangskreis vom Versorgungsteil gebildet ist.

Es ist Aufgabe der Erfindung, ein Pumpenaggregat im elektrischen Antriebsmotor und einer elektronischen Steuereinrichtung dahingehend zu verbessern, dass sich die Steuereinrichtung auf einfache Weise an verschiedene Einsatzzwecke anpassen lässt.

Diese Aufgabe wird gelöst durch ein Pumpenaggregat mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Pumpenaggregat weist neben der eigentlichen Pumpe, d. h. einem Pumpengehäuse und zumindest einem Laufrad einen das Laufrad antreibenden Antriebsmotor sowie eine elektronische Steuereinrichtung zur Steuerung des Antriebsmotors auf. Dabei ist erfindungsgemäß vorgesehen, dass die Steuereinrichtung nicht in eine Baugruppe integriert ist sondern vielmehr zumindest zwei voneinander getrennte Funktionsbausteine aufweist. Dabei sind diese Funktionsbausteine auf zumindest zwei voneinander getrennten Leiterplatten bzw. Platinen ausgebildet. Von diesen Funktionsbausteinen stellt ein erster Funktionsbaustein ein Versorgungsteil dar, welches die Eingangsspannung für den zweiten Funktionsbaustein bereitstellt. D. h. der erste Funktionsbaustein dient der Strom- bzw. Spannungsversorgung für den zweiten Funktionsbaustein. Der zweite Funktionsbaustein weist eine Motorelektronik auf, welche mit Statorspulen des Antriebsmotors zu deren Bestromung verbunden ist. D. h. der zweite Funktionsbaustein übernimmt mit der Motorelektronik die eigentliche Steuerung des Antriebsmotors beispielsweise eine elektronische Kommutierung.

Dadurch, dass die Steuereinrichtung in diese zumindest zwei Funktionsbausteine aufgeteilt ist, wird eine einfache Anpassung an unterschiedliche Einsatzzwecke möglich. Soll z. B. die Steuerelektronik an eine andere Netzspannung angepasst werden, ist es lediglich erforderlich, den ersten Funktionsbaustein, welcher der Strom- bzw. Spannungsversorgung für den zweiten Funktionsbaustein dient, durch einen anderen zu ersetzen. Der zweite Funktionsbaustein mit der Motorelektronik kann unverändert bleiben. Ferner könnte der erste Funktionsbaustein auch weggelassen werden, in dem Falle, dass eine externe Versorgungseinrichtung vorhanden ist, welche bereits die erforderliche Eingangsspannung für den zweiten Funktionsbaustein bereitstellt. Es ist somit zu erkennen, dass die erfindungsgemäße Aufteilung der Steuereinrichtung auf zumindest zwei Funktionsbausteine einen flexibleren Einsatz der Steuerelektronik ermöglicht.

Das Versorgungsteil des ersten Funktionsbausteins stellt bevorzugt eine Kleinspannung als Eingangsspannung für den zweiten Funktionsbaustein bereit. Dies ist besonders bevorzugt eine Spannung von 12 oder 24 V. Idealerweise handelt es sich dabei um eine Gleichspannung. D. h. das Versorgungsteil bildet bei dieser Ausführungsform ein Netzteil, welches eine Anschlussspannung in eine gewünschte Eingangsspannung für den zweiten Funktionsbaustein wandelt. Für die unterschiedlichen Anschlussspannungen, beispielsweise ebenfalls eine Kleinspannung oderz. B. 110 V Wechselstrom oder 240 V Wechselstrom können dann unterschiedliche erste Funktionsbausteine bereitgestellt werden, welche leicht ausgetauscht werden können und identische Eingangsspannungen für den zweiten Funktionsbaustein bereitstellen. Ferner kann in dem Fall, dass eine externe Versorgungseinrichtung, welche die gewünschte Kleinspannung bereitstellt, vorhanden ist, ggf. auf den ersten Funktionsbaustein ganz verzichtet werden und der zweite Funktionsbaustein direkt an die externe Versorgungseinrichtung, beispielsweise die Spannungsversorgung für eine Kesselsteuerung in einer Heizungsanlage angeschlossen werden.

Weiter bevorzugt ist auch die Motorelektronik zur Bestromung der Statorspulen mit Kleinspannung ausgebildet. Auch dabei handelt es sich vorzugsweise um eine Spannung von 12 oder 24 V. Die Verwendung von Kleinspannung zum Betrieb des Antriebsmotors, d. h. zur Bestromung der Statorspulen hat den Vorteil, dass die Statorspulen mit weniger Windungen und dickeren Windungsdrähten ausgebildet werden können. Dies vereinfacht den Wickelvorgang, da weniger Windungen ausgebildet werden müssen und sich ein dickerer Windungsdraht besser handhaben lässt. Darüber hinaus vereinfacht sich die Isolierung, da an die Isolierung für Kleinspannung führende Drähte andere Anforderungen gestellt werden als für Niederspannung führende Drähte, wenn die Spulen beispielsweise mit Niederspannung bestromt werden.

Der erste und der zweite Funktionsbaustein sind über eine elektrische Steckverbindung miteinander verbunden. Dies ermöglicht eine einfache Montage und darüber hinaus ggf. einen einfachen Austausch einzelner Funktionsbausteine, da die Steckverbindung leicht gelöst und wieder zusammengefügt werden kann.

Vorzugsweise enthält der erste Funktionsbaustein einen Transformator oder ein Schaltnetzteil, welche eine Anschlussspannung, beispielsweise eine Netzspannung von 240 oder 400 V auf eine gewünschte Eingangsspannung für den zweiten Funktionsbaustein herabsetzen, beispielsweise 12 oder 24 V. Gleichzeitig kann das Versorgungsteil des ersten Funktionsbausteins auch einen Gleichrichter enthalten, welcher eine Anschlussspannung in Form einer Wechselspannung gleichrichtet, so dass als Eingangsspannung für den zweiten Funktionsbaustein eine Gleichspannung ausgegeben wird.

Gemäß einer weiteren bevorzugten Ausführungsform weist der erste Funktionsbaustein zumindest ein Einstellelement, insbesondere zum Einstellen einer Drehzahl des Antriebsmotors, und/oder ein Sensorelement auf, welche mit dem zweiten Funktionsbaustein signalverbunden sind. Bei dieser Ausführungsform enthält der erste Funktionsbaustein somit nicht nur das eigentliche Versorgungsteil sondern darüber hinaus Sensor- bzw. Einstellelemente, deren Ausgangssignale an den zweiten Funktionsbaustein, welcher die eigentliche Steuerelektronik bzw. Motorelektronik enthält, weiter gegeben werden. So kann beispielsweise an dem ersten Funktionsbaustein ein Potentiometer vorhanden sein, mittels welchem die Drehzahl für den Motor eingestellt wird. Dieses Potentiometer ist elektrisch mit der Motorelektronik auf dem zweiten Funktionsbaustein verbunden, welche dann die Drehzahl entsprechend einstellt. So kann der Motorelektronik der eingestellte Drehzahlwert als Spannungssignal zugeführt werden. Auch könnten an dem ersten Funktionsbaustein Sensoren, wie beispielsweise ein Temperatursensor angeordnet sein, dessen Ausgangssignal an die Motorelektronik im zweiten Funktionsbaustein weitergeleitet wird, um beispielsweise den Motor bei Überschreiten einer bestimmten Temperatur im ersten Funktionsbaustein abzuschalten. Auch weitere Einstell-, Bedien- und/oder Anzeigeelemente könnten mit am ersten Funktionsbaustein angeordnet werden und elektrisch bzw. auf andere geeignete Art mit der Motorelektronik im zweiten Funktionsbaustein signalverbunden sein. Dies ist beispielsweise dann von Vorteil, wenn der zweite Funktionsbaustein so angeordnet ist, dass er von außen schlecht zugänglich ist, so dass er sich nicht dazu eignet, direkt am zweiten Funktionsbaustein Bedien- oder Anzeigeelemente anzubringen. Der erste Funktionsbaustein könnte dann so angeordnet werden, dass er besser zugänglich ist, so dass es sich anbietet, Bedien- und/oder Anzeigeelemente an diesem anzuordnen. Eine Signalverbindung könnte elektrisch oder beispielsweise auch drahtlos über Funk erfolgen.

Die Motorelektronik des zweiten Funktionsbausteins ist, wie vorangehend bereits beschrieben vorzugsweise zur Drehzahlsteuerung des Antriebsmotors ausgebildet und weist vorzugsweise zumindest einen elektronischen Leistungsschalter zum Erzeugen einer Ausgangsspannung gewünschter Frequenz auf. Wird der Motorelektronik als Eingangsspannung von dem ersten Funktionsbaustein vorzugsweise eine Gleichspannung bereitgestellt, bestromt die Motorelektronik die Statorspulen über einen oder mehrere Leistungsschalter mit der erforderlichen Frequenz, um eine gewünschte Motordrehzahl zu erreichen.

So weist die Motorelektronik zumindest einen Teil eines Frequenzumrichters auf, nämlich den Ausgangskreis eines Frequenzumrichters, der Eingangskreis wird dann von dem Versorgungsteil, d. h. dem ersten Funktionsbaustein gebildet.

Gemäß einer besonders bevorzugten Ausführungsform der Erfindung ist der zweite Funktionsbaustein in einem Statorgehäuse des Antriebsmotors und der erste Funktionsbaustein in einem mit dem Statorgehäuse verbundenen Elektronikgehäuse angeordnet. Dies ermöglicht es, die eigentliche Motorelektronik direkt im Antriebsmotor, d. h. im Statorgehäuse nahe der Statorspulen anzuordnen. So kann in dem Statorgehäuse eine Leiterplatte angeordnet werden, welche die einzelnen Statorspulen kontaktiert und miteinander verschaltet und darüber hinaus die elektronischen Komponenten des zweiten Funktionsbausteins, insbesondere die Motorelektronik trägt. So wird eine einfache elektrische Verschaltung und Montage möglich, da Motorelektronik und Spulen über ein und dieselbe Leiterplatte elektrisch kontaktiert werden können. Darüber hinaus lässt sich ein kompakter Aufbau des Antriebsmotors realisieren und die Motorelektronik kann mit dem Stator zusammen im Statorgehäuse dicht eingeschlossen werden.

Der erste Funktionsbaustein hingegen, welcher einen Versorgungsteil bildet, wird zweckmäßigerweise in einem außerhalb des Statorgehäuses angeordneten Elektronikgehäuse angeordnet. Dies hat den Vorteil, dass dieses Elektronikgehäuse so ausgebildet werden kann, dass es leicht geöffnet werden kann, beispielsweise um eine Anschlussleitung mit den elektrischen Komponenten des ersten Funktionsbausteins zu verbinden. So kann in dem Elektronikgehäuse beispielsweise eine Anschlussklemme oder ein Anschlussstecker zur Verbindung mit einer Anschlussleitung vorgesehen sein. Auch können an dem Elektronikgehäuse die oben beschriebenen Bedien- oder Anzeigeelemente und Anschlüsse für Sensoren leicht ausgebildet werden, da ein solches von außen an das Statorgehäuse angeordnetes Elektronikgehäuse gut von außen zugänglich ist. Darüber hinaus kann der in dem Elektronikgehäuse angeordnete erste Funktionsbaustein oder das gesamte Elektronikgehäuse leicht ausgetauscht werden, um gewünschte Anpassungen, wie sie oben beschrieben wurden, durchzuführen, beispielsweise unterschiedliche erste Funktionsbausteine für verschiedene Anschlussspannungen bereitzustellen. Dies ist fertigungstechnisch von Vorteil, da für alle Pumpenvarianten dann das Statorgehäuse mit der darin angeordneten Motorelektronik identisch ausgebildet werden kann und nur unterschiedliche Elektronikgehäuse mit unterschiedlichen ersten Funktionsbausteinen mit diesen Statorgehäusen verbunden werden müssen. So wird die Teilevielfalt in der Fertigung reduziert.

Vorzugsweise sind das Innere des Statorgehäuses und das Innere des Elektronikgehäuses durch zumindest eine Wandung voneinander getrennt. So können die elektronischen Bauteile im Inneren des Statorgehäuses und/oder im Inneren des Elektronikgehäuses geschützt werden, insbesondere vor eindringender Feuchtigkeit geschützt werden. Zur elektrischen Verbindung der elektronischen Bauteile bzw. der Funktionsbausteine in dem Statorgehäuse und dem Elektronikgehäuse ist vorzugsweise in der zumindest einen Wandung eine Durchbrechung für eine Kabeldurchführung oder elektrische Steckkontakte vorgesehen. Alternativ könnten elektrische Steckkontakte auch direkt in der Wandung ausgebildet sein, beispielsweise indem elektrische Leiter in die aus Kunststoff gefertigte Wandung eingegossen sind.

Gemäß einer besonderen Ausführungsform der Erfindung ist das Elektronikgehäuse an eine axiale Stirnseite des Statorgehäuses angesetzt. Ein solches Statorgehäuse ist beispielsweise rohrförmig ausgebildet, wobei das Statorgehäuse mit einem Axialende an ein Pumpengehäuse angesetzt ist und an das entgegengesetzte Axialende das Elektronikgehäuse angesetzt ist. So kann das Elektronikgehäuse gleichzeitig die angrenzende axiale Stirnseite des Statorgehäuses verschließen. Zusätzlich kann das Statorgehäuse in diesem Bereich durch einen Deckel verschlossen sein, so dass das Statorgehäuse auch wenn das Elektronikgehäuse abgenommen ist, geschlossen ist. Der Deckel bildet dann eine Wandung zwischen Stator- und Elektronikgehäuse.

Besonders bevorzugt bildet der zweite Funktionsbaustein eine Baueinheit mit einem Stator des Antriebsmotors. So kann der zweite Funktionsbaustein eine Leiterplatte mit elektronischen Bauelementen aufweisen, welche direkt am Stator angebracht ist, so dass sie die elektrische Verbindung zu den einzelnen Statorspulen herstellen kann, wie es oben beschrieben wurde. So wird zum einen ein kompakter Aufbau des Stators und damit des gesamten Antriebsmotors erreicht. Zum anderen wird die Montage vereinfacht, da der Stator mit dem zweiten Funktionsbaustein als eine Baueinheit vorgefertigt und dann diese Baueinheit komplett in das Statorgehäuse eingesetzt werden kann.

Gemäß der Erfindung erstrecken sich die Leiterplatten des ersten Funktionsbausteins und des zweiten Funktionsbausteins gewinkelt zueinander und vorzugsweise normal zueinander. Durch diese Anordnung wird eine einfache Verbindung zwischen beiden Leiterplatten realisiert, da an der Leiterplatte des zweiten Funktionsbausteins eine elektrische Steckkupplung ausgebildet wird, in welche die Leiterplatte des ersten Funktionsbausteins mit einer Kante eingreift, wobei an dieser Kante der Leiterplatte zumindest an einer Oberfläche elektrische Kontakte ausgebildet sind. So kann die Leiterplatte selbst einen Stecker bilden, wobei die Kontakte mit den elektrischen Kontakten der Steckkupplung elektrisch leitend in Eingriff treten.

Gemäß einer besonderen Ausführungsform der Erfindung kann die Steuereinrichtung einen dritten Funktionsbaustein umfassen, welcher Bedien- und/oder Anzeigeelemente aufweist. In einem solchen dritten Funktionsbaustein können solche Bedien- und/oder Anzeigeelemente zusammengefasst werden. Dies ist vorteilhaft, da dieser dritte Funktionsbaustein dann so platziert werden kann, dass er von außen zur Bedienung und zum Ablesen gut zugänglich ist. Beispielsweise kann der dritte Funktionsbaustein an der Oberfläche, z. B. im Deckel eines Elektronikgehäuses angeordnet werden. Darüber hinaus ist es möglich, diesen dritten Funktionsbaustein wiederum in verschiedenen Varianten vorzuhalten, um unterschiedliche Funktionalitäten des Pumpenaggregates bereitstellen zu können. So kann es möglich sein, dass ein und dasselbe Pumpenaggregat mit unterschiedlichen Einstellmöglichkeiten angeboten wird. In solchem Fall können die Pumpenaggregate bis auf den dritten Funktionsbaustein identisch ausgebildet werden, wodurch die Teilevielfalt in der Fertigung reduziert wird. Ferner ist es auch denkbar, ein Pumpenaggregat wahlweise mit oder ohne dritten Funktionsbaustein anzubieten, beispielsweise wenn überhaupt gar keine Einstellmöglichkeiten gewünscht sind, da die Pumpe von einer externen Steuereinrichtung angesteuert wird oder aber konstant laufen soll.

Der dritte Funktionsbaustein ist vorzugsweise mit dem ersten Funktionsbaustein elektrisch verbunden. Auch hier wird bevorzugt eine Steckverbindung vorgesehen, was eine einfache Montage ermöglicht. Auch hier können vorzugsweise die Leiterplatte des ersten Funktionsbausteins und eine Leiterplatte des dritten Funktionsbausteins gewinkelt, insbesondere normal zueinander angeordnet sein. So kann die Leiterplatte des ersten Funktionsbausteins beispielsweise auch mit einer mit Kontakten versehenen Seitenkante in eine Steckkupplung eingreifen, welche auf einer Leiterplatte des dritten Funktionsbausteins ausgebildet ist.

Der dritte Funktionsbaustein kann mit dem ersten Funktionsbaustein verbunden sein, wobei der erste Funktionsbaustein vorzugsweise eine Signalverbindung von dem dritten zu dem zweiten Funktionsbaustein bereitstellt. So ist es möglich an dem dritten Funktionsbaustein Anzeige- und/oder Betätigungs- bzw. Einstellelemente oder Steuerelemente vorzusehen, welche Einfluss auf die Motorelektronik im zweiten Funktionsbaustein haben oder bestimmte Einstellungen oder Betriebszustände der Motorelektronik im zweiten Funktionsbaustein zur Anzeige bringen. D. h. in diesem Fall wirkt der dritte Funktionsbaustein nicht unmittelbar mit dem ersten Funktionsbaustein zusammen, sondern mit dem zweiten Funktionsbaustein. Dabei stellt jedoch der erste Funktionsbaustein die erforderliche Signalverbindung zwischen dem zweiten und dem dritten Funktionsbaustein her, beispielsweise indem entsprechend Leiterbahnen auf einer Leiterplatte des ersten Funktionsbausteins ausgebildet sind.

Besonders bevorzugt ist das Pumpenaggregat ein Umwälzpumpenaggregat, insbesondere ein Heizungs- oder Brauchwasserumwälzpumpenaggregat. Dabei kann der Antriebsmotor vorzugsweise ein Spaltrohrmotor oder Kugelmotor sein, d. h. ein nasslaufender Elektromotor, bei welchem zwischen Stator und Rotor ein Spaltrohr angeordnet ist, so dass der Rotor sich in der zu fördernden Flüssigkeit dreht. Unter einem solchen Spaltrohr ist auch eine Trennkalotte zu verstehen, wie sie in einem Kugelmotor zum Einsatz kommt. So kann unter einem Spaltrohr im Sinne der Erfindung jedes geeignete Trennelement zum Trennen von Rotorraum und Statorraum verstanden werden, unabhängig von seiner Form.

Nachfolgend wird die Erfindung beispielhaft anhand der beigefügten Figuren beschrieben. In diesen zeigen:

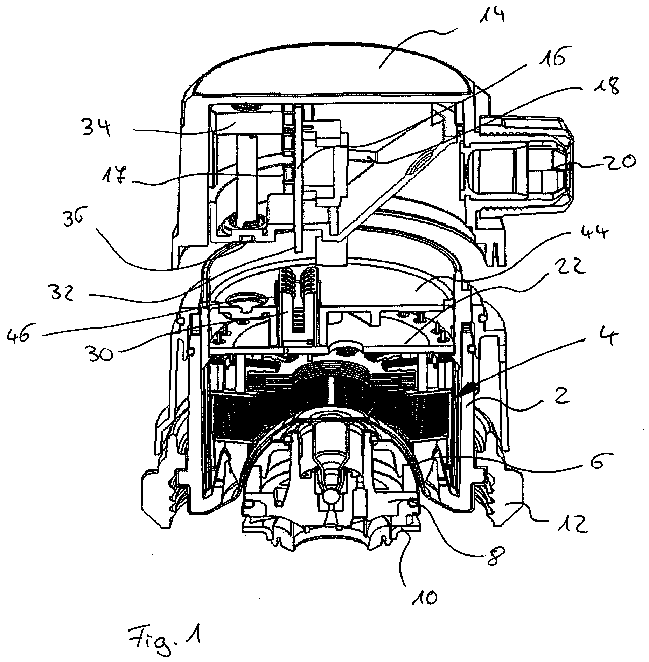

- Fig. 1: in einer Schnittansicht, teilweise explodiert, ein Pumpenaggregat gemäß der Erfindung,

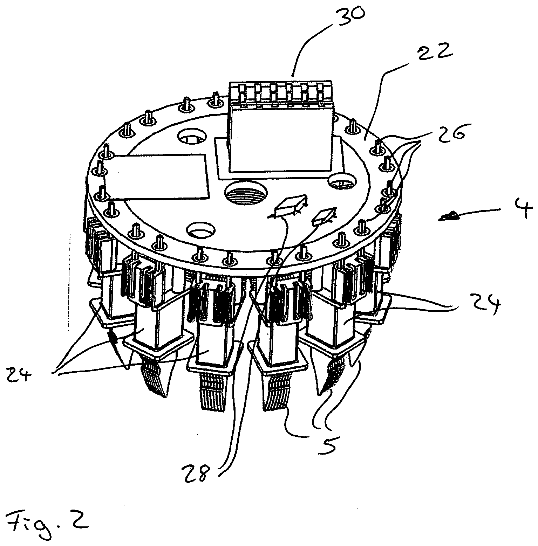

- Fig. 2: eine Detailansicht des Stators des Pumpenaggre-gates gemäß Fig. 1 und
- Fig. 3: in einer Einzelansicht die elektronischen Komponenten eines erfindungsgemäßen Pumpenaggregates.

Das erfindungsgemäße Pumpenaggregat weist ein Motor- bzw. Statorgehäuse 2 auf, in dessen Inneren ein Stator 4 angeordnet ist, sowie ein Spaltrohr 6 in Form einer Trennkalotte, in dessen Inneren ein Rotor 8 angeordnet ist. Der Rotor 8 trägt an seinem dem Stator 4 abgewandtem Ende ein integriertes Laufrad 10, welches in einem hier nicht gezeigten Pumpengehäuse läuft. Das Pumpengehäuse wird mit dem Statorgehäuse 2 mit Hilfe der an dem Statorgehäuse 2 angreifenden Überwurfmutter 12 verbunden.

Das Statorgehäuse 2 ist im Wesentlichen rohrförmig ausgebildet und wird an seinem einen Axialende von der Trennkalotte bzw. dem Spaltrohr 6 verschlossen. Am entgegengesetztem Axialende ist ein Elektronikgehäuse 14 an das Statorgehäuse 2 angesetzt. Das Elektronikgehäuse 14 ist topfförmig ausgebildet und mit seiner offenen Seite an das Statorgehäuse 2 angesetzt, so dass das Statorgehäuse 2 diese offene Seite verschließt.

Die elektronische Steuereinrichtung dieses Pumpenaggregates ist in mehrere Funktionsbausteine aufgeteilt. So ist ein erster Funktionsbaustein im Inneren des Elektronikgehäuses 14 angeordnet. Dieser erste Funktionsbaustein ist von einer Leiterplatte 16 gebildet. Die Leiterplatte 16 trägt elektronische Bauelemente 17, welche ein Versorgungsteil, insbesondere ein Netzteil darstellen. Dieses Netzteil wird über Anschlussklemmen 18 mit einem hier nicht gezeigten Netzkabel verbunden, welches durch die Kabeldurchführung 20 in das Elektronikgehäuse 14 geführt ist. Das Versorgungsteil, welche von der Leiterplatte 18 gebildet wird, stellt eine Eingangsspannung, insbesondere eine Kleinspannung, beispielsweise 12 V Gleichstrom als Eingangsspannung für einen zweiten Funktionsbaustein bereit. Dieser zweite Funktionsbaustein wird von einer Leiterplatte 22 gebildet, welche mit dem Stator 4 eine Baueinheit bildet und in dem Statorgehäuse 2 angeordnet ist. So kontaktiert die Leiterplatte 22 die Statorspulen 24, die mit Anschlussstiften 26 in Löcher der Leiterplatte 22 eingreifen. Die Leiterplatte 22 trägt darüber hinaus elektronische Bauelemente 28, welche die eigentliche Motorelektronik bzw. Motorsteuerung bilden. Diese elektronischen Bauelemente 28 dienen der gesteuerten Bestromung der Spulen 24, welche auf der Leiterplatte 22 entsprechend verschaltet und mit den elektronischen Bauteilen 28 verbunden sind. Insbesondere dienen die elektronischen Bauelemente 28 als Teil eines Frequenzumrichters dazu, die Spulen 24 mit einer Spannung gewünschter Frequenz zu bestromen. Dazu ist auf der Leiterplatte 22 bevorzugt zumindest ein Leistungsschalter angeordnet, welcher eines der Bauelemente 28 darstellt.

Dieser zweite Funktionsbaustein, welcher von der Leiterplatte 22 gebildet wird, weist erfindungsgemäß eine Steckkupplung 30 auf, in welche die Leiterplatte 16 mit einer Kante 32 eingreift. An der Kante 32 der Leiterplatte sind erfindungsgemäß an zumindest einer Oberfläche elektrische Kontakte ausgebildet, welche mit den elektrischen Kontakten der Steckkupplung 30 elektrisch leitend in Eingriff treten. Über diese Stecckupplung 30 wird dem zweiten Funktionsbaustein, welcher von den Bauelementen 28 auf der Leiterplatte 22 und den zugehörigen elektronischen Bauteilen 28 gebildet wird, eine Eingangsspannung in der zuvor beschriebenen Art zugeführt. Darüber hinaus können auch noch Steuersignale an die Motorelektronik in dem zweiten Funktionsbaustein übertragen werden.

So ist auf der Leiterplatte 16 ein Potentiometer 34 angeordnet, welches über eine Stellschraube 36 drehbar ist. Das Potentiometer 34 dient der Drehzahleinstellung des Antriebsmotors. Mit Hilfe des Potentiometers 34 wird in dem ersten Funktionsbaustein, welcher von den der Leiterplatte 16 und den zugehörigen elektronischen Bauteilen 17 gebildet wird, ein Spannungssignal erzeugt, welches proportional zu der gewünschten Drehzahl des Motors ist. Diese Spannung wird über die Steckverbindung, welche von der Steckkupplung 30 gebildet wird auf den zweiten Funktionsbaustein, welcher von der Leiterplatte 22 und den darauf angeordneten elektronischen Bauelementen 28 gebildet wird, übertragen, so dass die Motorelektronik, welche von den elektronischen Bauelementen 28 gebildet wird, dann die Spulen 24 mit der gewünschten Frequenz bestromt und so die Drehzahl einstellt. D. h. die Motorelektronik auf der Leiterplatte 22 steuert die Drehzahl des Antriebsmotors in diesem Fall in Abhängigkeit eines Spannungssignals, welches sie von dem ersten Funktionsbaustein erhält.

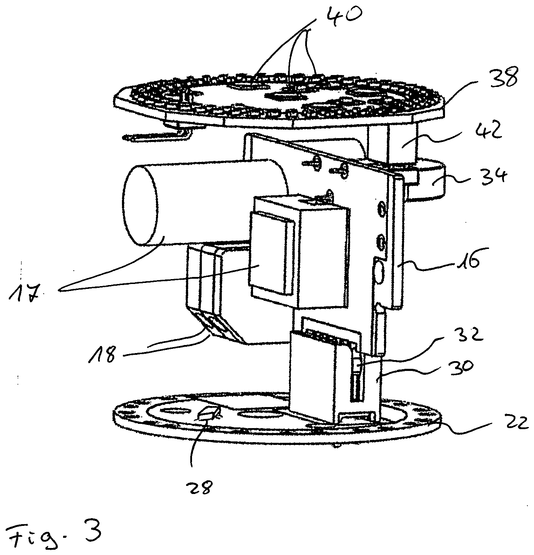

Bei der Ausführungsform gemäß Fig. 3 ist noch ein dritter Funktionsbaustein vorgesehen, welcher von einer dritten Leiterplatte 38 gebildet wird. Auf der Leiterplatte 38 sind wiederum elektronische Bauteile 40 angeordnet, welche vorzugsweise Bedien- und Anzeigeelemente, beispielsweise Taster, Schalter und Leuchtdioden sind. Es können jedoch auch weitere Bauteile, welche Steuer- oder Regelfunktionen übernehmen, dort angeordnet sein. Die Leiterplatte 38 ist über eine Steckkupplung 42 mit der Leiterplatte 16 des ersten Funktionsbausteins verbunden. Die Leiterplatte 38 erstreckt sich parallel zur Leiterplatte 22 und normal zur Leiterplatte 16. So kommen Bedien- und Anzeigeelemente an der Axialseite des Elektronikgehäuses 14 zu liegen. Der dritte Funktionsbaustein, welcher von der Leiterplatte 38 gebildet wird, stellt eine optionale Funktionalität, beispielsweise Einstellmöglichkeiten wie Zeitsteuerung und ähnliches bereit. Die Ausgangssignale werden über die Steckkupplung 42 auf die erste Leiterplatte 16 und von dieser ggf. über die Stecckupplung 30 auf die Leiterplatte 22 und die dort angeordnete Motorelektronik übertragen. Insbesondere können die elektronischen Bauteile 40 auf der Leiterplatte 38 ein Ein- und Ausschalten des Antriebsmotors durch Ein- und Ausschalten der Spannungsversorgung, welche durch den ersten Funktionsbaustein, d. h. die Leiterplatte 16 und die darauf angeordneten elektronischen Bauteile 17 bereitgestellt wird, bewirken.

Es ist zu verstehen, dass ein und dasselbe Pumpenaggregat mit oder ohne den dritten Funktionsbaustein angeboten werden könnte. Die Leiterplatten 16 und 22 mit den darauf angeordneten elektronischen Bauteilen 17 und 28 blieben dann unverändert. D. h. hier wird ein modularer Aufbau geschaffen, welcher es ermöglicht, verschiedene Funktionsbausteine je nach gewünschter Funktionalität der Pumpe zusammenzustecken. Auch der erste Funktionsbaustein, gebildet aus der Leiterplatte 16 und der elektronischen Bauelementen 17, welche insbesondere ein Schaltnetzteil oder einen Transformator aufweisen bzw. bilden, könnte in unterschiedlichen Ausführungsformen angeboten werden. So wäre es denkbar, dass, wenn in einer Anlage, in welcher das Pumpenaggregat eingesetzt werden soll, ohnehin eine Kleinspannungsversorgung vorhanden ist, auf ein Netzteil in dem ersten Funktionsbaustein verzichtet werden kann, so dass in diesem Fall dann die Leiterplatte 16 keinen Transformator und kein Schaltnetzteil aufweisen müsste. Auf diese Weise könnte das Pumpenaggregat mit ein und demselben Statorgehäuse 2 und darin angeordneten elektronischen Bauteilen, d. h. der Leiterplatte 22 und den elektronischen Bauteilen 28 für unterschiedliche Spannungsversorgungen bereitgestellt werden, nämlich wahlweise Netzspannung oder Kleinspannung. Es würde dann lediglich eine unterschiedliche Leiterplatte 16 in dem Elektronikgehäuse 14 angeordnet werden müssen.

Das Statorgehäuse 2 ist bei dieser Ausführungsform darüber hinaus an seinem axialen, dem Elektronikgehäuse 14 zugewandtem Ende durch einen Deckel 44 verschlossen. Der Deckel 44 weist eine Öffnung 46 auf, durch welche sich die Steckkupplung 30 erstreckt. Der Deckel 44 bildet eine Wandung, welche das Innere des Statorgehäuses 2 und das Innere des Elektronikgehäuses 14 voneinander trennt.

### Bezugszeichenliste

- 2: Statorgehäuse
- 4: Stator
- 5: Polstege
- 6: Spaltrohr
- 8: Rotor
- 10: Laufrad
- 12: Überwurfmutter
- 14: Elektronikgehäuse
- 16: Leiterplatte
- 17: elektronische Bauteile
- 18: Anschlussklemmen
- 20: Kabeldurchführung
- 22: Leiterplatte
- 24: Statorspulen
- 26: Anschlussstifte
- 28: Bauelemente
- 30: Steckkupplung
- 32: Kante
- 34: Potentiometer
- 36: Stellschraube
- 38: Leiterplatte
- 40: elektronische Bauteile
- 42: Steckkupplung
- 44: Deckel
- 46: Öffnung

## Patentansprüche

1. Pumpenaggregat mit einem Pumpengehäuse, zumindest einem Laufrad, einem das Laufrad antreibenden elektrischen Antriebsmotor und einer elektronischen Steuereinrichtung zur Steuerung des Antriebsmotors, wobei die Steuereinrichtung in zwei auf zumindest zwei getrennten Leiterplatten angeordnete Funktionsbausteine (16, 22) aufgeteilt ist, von denen ein erster Funktionsbaustein (16) ein Versorgungsteil darstellt, welches die Eingangsspannung für den zweiten Funktionsbaustein (22) bereitstellt, wobei der zweite Funktionsbaustein (22) eine Motorelektronik aufweist, welche mit Statorspulen (24) des Antriebsmotors zu deren Bestromung verbunden ist, wobei die Motorelektronik einen Ausgangskreis eines Frequenzumrichters aufweist, wobei ein Eingangskreis des Frequenzumrichters vom Versorgungsteil gebildet ist, wobei der zweite Funktionsbaustein (22) eine Steckkupplung (30) aufweist, in welche die Leiterplatte des ersten Funktionsbausteins (16) mit einer Kante (32) eingreift, und wobei an der Kante (32) der Leiterplatte des ersten Funktionsbausteins (16) zumindest an einer Oberfläche elektrische Kontakte ausgebildet sind, welche mit den elektrischen Kontakten der Steckkupplung (30) elektrisch leitend in Eingriff treten.

2. Pumpenaggregat nach Anspruch 1, **dadurch gekennzeichnet, dass** das Versorgungsteil des ersten Funktionsbausteins (16) eine Kleinspannung als Eingangsspannung für den zweiten Funktionsbaustein (22) bereitstellt.

3. Pumpenaggregat nach Anspruch 1 oder 2, **dadurch gekennzeichnet, dass** die Motorelektronik zur Bestromung der Statorspulen (24) mit Kleinspannung ausgebildet ist.

4. Pumpenaggregat nach einem der vorangehenden Ansprüche, **dadurch gekennzeichnet, dass** der erste Funktionsbaustein (16) einen Transformator oder ein Schaltnetzteil aufweist.

5. Pumpenaggregat nach einem der vorangehenden Ansprüche, **dadurch gekennzeichnet, dass** der erste Funktionsbaustein (16) zumindest ein Einstellelement (34), insbesondere zum Einstellen einer Drehzahl des Antriebsmotors, und/oder ein Sensorelement aufweist, welche mit dem zweiten Funktionsbaustein (22) signalverbunden sind.

6. Pumpenaggregat nach einem der vorangehenden Ansprüche, **dadurch gekennzeichnet, dass** die Motorelektronik des zweiten Funktionsbausteins (22) zur Drehzahlsteuerung des Antriebsmotors ausgebildet ist und vorzugsweise einen elektronischen Leistungsschalter zum Erzeugen einer Ausgangsspannung gewünschter Frequenz aufweist.

7. Pumpenaggregat nach einem der vorangehenden Ansprüche, **dadurch gekennzeichnet, dass** der zweite Funktionsbaustein (22) in einem Statorgehäuse (2) des Antriebsmotors und der erste Funktionsbaustein (16) in einem mit dem Statorgehäuse (2) verbundenen Elektronikgehäuse (14) angeordnet sind.

8. Pumpenaggregat nach Anspruch 7, **dadurch gekennzeichnet, dass** das Innere des Statorgehäuse (2) und das Innere des Elektronikgehäuses (14) durch zumindest eine Wandung voneinander getrennt sind.

9. Pumpenaggregat nach Anspruch 7 oder 8, **dadurch gekennzeichnet, dass** das Elektronikgehäuse (14) an eine axiale Stirnseite des Statorgehäuses (2) angesetzt ist.

10. Pumpenaggregat nach einem der vorangehenden Ansprüche, **dadurch gekennzeichnet, dass** der zweite Funktionsbaustein (22) eine Baueinheit mit einem Stator (4) des Antriebsmotors bildet.

11. Pumpenaggregat nach einem der vorangehenden Ansprüche, **dadurch gekennzeichnet, dass** die Leiterplatten des ersten Funktionsbausteines (16) und des zweiten Funktionsbausteines (22) normal zueinander angeordnet sind.

12. Pumpenaggregat nach einem der vorangehenden Ansprüche, **dadurch gekennzeichnet, dass** die Steuereinrichtung einen dritten Funktionsbaustein (38) umfasst, welcher Bedien- und/oder Anzeigeelemente (40) aufweist.

13. Pumpenaggregat nach Anspruch 12, **dadurch gekennzeichnet, dass** der dritte Funktionsbaustein (38) mit dem ersten Funktionsbaustein (16) elektrisch verbunden ist.

14. Pumpenaggregat nach Anspruch 12 oder 13, **dadurch gekennzeichnet, dass** der dritte Funktionsbaustein (38) mit dem ersten Funktionsbaustein (16) verbunden ist und der erste Funktionsbaustein (16) eine Signalverbindung von dem dritten (38) zu dem zweiten (22) Funktionsbaustein bereitstellt.

15. Pumpenaggregat nach einem der vorangehenden Ansprüche, **dadurch gekennzeichnet, dass** es als Umwälzpumpenaggregat, insbesondere als Heizungs- oder Brauchwasser-Umwälzpumpenaggregat ausgebildet ist.

16. Pumpenaggregat nach einem der vorangehenden Ansprüche, **dadurch gekennzeichnet, dass** der Antriebsmotor ein Spaltrohrmotor oder Kugelmotor ist.

## Claims

1. A pump unit having a pump housing, at least one impeller, an electric drive motor driving the impeller and an electronic control device for controlling the drive motor, wherein the control device is divided into two function modules (16, 22) arranged on at least two separate printed circuit boards, of which a first function module (16) constitutes a supply part, which provides the input voltage for the second function module (22), wherein the second function module (22) has motor electronics, which are connected to stator coils (24) of the drive motor for energizing the same, wherein the motor electronics have an output circuit of a frequency converter, wherein an input circuit of the frequency converter is formed by the supply part, wherein the second function module (22) has a plug-in coupling (30), into which an edge (32) of the printed circuit board of the first function module (16) engages, and wherein electrical contacts are formed on the edge (32) of the printed circuit board of the first function module (16) at least on one surface, which contacts enter into engagement with the electrical contacts of the plug coupling (30) in an electrically conductive manner.

2. The pump unit according to Claim 1, **characterized in that** the supply part of the first function module (16) provides a small voltage as input voltage for the second function module (22).

3. The pump unit according to Claim 1 or 2, **characterized in that** the motor electronics are designed for energizing the stator coils (24) with a small voltage.

4. The pump unit according to one of the preceding claims, **characterized in that** the first function module (16) has a transformer or a switched mode power supply.

5. The pump unit according to one of the preceding claims, **characterized in that** the first function module (16) has at least one adjustment element (34), particularly for adjusting a speed of the drive motor, and/or a sensor element, which are signal-connected to the second function module (22).

6. The pump unit according to one of the preceding claims, **characterized in that** the motor electronics of the second function module (22) is designed for the speed control of the drive motor and preferably has an electronic power switch for generating an output voltage of desired frequency.

7. The pump unit according to one of the preceding claims, **characterized in that** the second function module (22) is arranged in a stator housing (2) of the drive motor and the first function module (16) is arranged in an electronics housing (14) connected to the stator housing (2).

8. The pump unit according to Claim 7, **characterized in that** the interior of the stator housing (2) and the interior of the electronics housing (14) are separated from one another by at least one wall.

9. The pump unit according to Claim 7 or 8, **characterized in that** the electronics housing (14) is attached to an axial end face of the stator housing (2).

10. The pump unit according to one of the preceding claims, **characterized in that** the second function module (22) forms a modular unit with a stator (4) of the drive motor.

11. The pump unit according to one of the preceding claims, **characterized in that** the printed circuit boards of the first function module (16) and the second function module (22) are arranged normal to one another.

12. The pump unit according to one of the preceding claims, **characterized in that** the control device comprises a third function module (38), which has control and/or display elements (40).

13. The pump unit according to Claim 12, **characterized in that** the third function module (38) is electrically connected to the first function module (16).

14. The pump unit according to Claim 12 or 13, **characterized in that** the third function module (38) is connected to the first function module (16) and the first function module (16) provides a signal connection from the third (38) to the second (22) function module.

15. The pump unit according to one of the preceding claims, **characterized in that** it is constructed as a circulation pump unit, particularly as a heating or service water circulation pump unit.

16. The pump unit according to one of the preceding claims, **characterized in that** the drive motor is a canned motor or spherical motor.

## Revendications

1. Groupe motopompe avec un boîtier de pompe, au moins une roue mobile, un moteur d'entraînement électrique entraînant la roue mobile et un dispositif de commande électronique pour la commande du moteur d'entraînement, le dispositif de commande étant divisé en deux modules fonctionnels (16, 22) agencés sur au moins deux circuits imprimés séparés, dont un premier module fonctionnel (16) constitue une partie d'alimentation qui fournit la tension d'entrée pour le deuxième module fonctionnel (22), le deuxième module fonctionnel (22) comprenant une électronique de moteur qui est reliée aux bobines de stator (24) du moteur d'entraînement pour leur alimentation en courant, l'électronique de moteur comprenant un circuit de sortie d'un convertisseur de fréquence, un circuit d'entrée du convertisseur de fréquence étant formé par la partie d'alimentation, le deuxième module fonctionnel (22) comprenant un raccord enfichable (30) dans lequel le circuit imprimé du premier module fonctionnel (16) se met en prise avec une arête (32), et des contacts électriques étant réalisés à l'arête (32) du circuit imprimé du premier module fonctionnel (16) au moins sur une surface, lesquels entrent en prise de manière électroconductrice avec les contacts électriques du raccord enfichable (30).

2. Groupe motopompe selon la revendication 1, **caractérisé en ce que** la partie d'alimentation du premier module fonctionnel (16) fournit une faible tension comme tension d'entrée pour le deuxième module fonctionnel (22).

3. Groupe motopompe selon la revendication 1 ou 2, **caractérisé en ce que** l'électronique de moteur est réalisée pour l'alimentation en courant des bobines de stator (24) avec une faible tension.

4. Groupe motopompe selon l'une quelconque des revendications précédentes, **caractérisé en ce que** le premier module fonctionnel (16) comprend un transformateur ou un bloc d'alimentation.

5. Groupe motopompe selon l'une quelconque des revendications précédentes, **caractérisé en ce que** le premier module fonctionnel (16) comprend au moins un élément de réglage (34), en particulier pour le réglage d'une vitesse de rotation du moteur d'entraînement, et/ou un élément de capteur, lesquels sont reliés en signal au deuxième module fonctionnel (22).

6. Groupe motopompe selon l'une quelconque des revendications précédentes, **caractérisé en ce que** l'électronique de moteur du deuxième module fonctionnel (22) est conçue pour la commande de vitesse de rotation du moteur d'entraînement et comprend de préférence un commutateur électronique pour la génération d'une tension de sortie de fréquence souhaitée.

7. Groupe motopompe selon l'une quelconque des revendications précédentes, **caractérisé en ce que** le deuxième module fonctionnel (22) est agencé dans un boîtier de stator (2) du moteur d'entraînement et le premier module fonctionnel (16) est agencé dans un boîtier d'électronique (14) relié au boîtier de stator (2).

8. Groupe motopompe selon la revendication 7, **caractérisé en ce que** l'intérieur du boîtier de stator (2) et l'intérieur du boîtier d'électronique (14) sont séparés l'un de l'autre par au moins une paroi.

9. Groupe motopompe selon la revendication 7 ou 8, **caractérisé en ce que** le boîtier d'électronique (14) est rapporté sur un côté frontal axial du boîtier de stator (2).

10. Groupe motopompe selon l'une quelconque des revendications précédentes, **caractérisé en ce que** le deuxième module fonctionnel (22) forme une unité de construction avec un stator (4) du moteur d'entraînement.

11. Groupe motopompe selon l'une quelconque des revendications précédentes, **caractérisé en ce que** les circuits imprimés du premier module fonctionnel (16) et du deuxième module fonctionnel (22) sont agencés orthogonalement l'un à l'autre.

12. Groupe motopompe selon l'une quelconque des revendications précédentes, **caractérisé en ce que** le dispositif de commande comporte un troisième module fonctionnel (38) qui comprend des éléments de commande et/ou d'affichage (40).

13. Groupe motopompe selon la revendication 12, **caractérisé en ce que** le troisième module fonctionnel (38) est électriquement relié au premier module fonctionnel (16).

14. Groupe motopompe selon la revendication 12 ou 13, **caractérisé en ce que** le troisième module fonctionnel (38) est relié au premier module fonctionnel (16) et le premier module fonctionnel (16) fournit une liaison de signal du troisième (38) au deuxième (22) module fonctionnel.

15. Groupe motopompe selon l'une quelconque des revendications précédentes, **caractérisé en ce qu'**il est réalisé comme groupe motopompe de recirculation, en particulier comme groupe motopompe de recirculation de chauffage ou d'eau industrielle.

16. Groupe motopompe selon l'une quelconque des revendications précédentes, **caractérisé en ce que** le moteur d'entraînement est un moteur à gaine ou un moteur à billes.
